# EUROPÄISCHE PATENTANMELDUNG

(11) **EP 0 609 181 A2**
(43) Veröffentlichungstag der Anmeldung: **03.08.1994**
(21) Anmeldenummer: 94810044.1
(22) Anmeldetag: 25.01.1994
(51) Int. Cl.: G07F 17/00, G07F 7/00, G07F 15/00

(54) **System zum Aufladen von Elektromobilen an Stromtankstellen**

(30) Priorität: 29.01.1993 CH 258/93
(71) Anmelder: Leu, Christian, CH-3043 Uettligen (CH)
(72) Erfinder: Leu, Christian, CH-3043 Uettligen (CH)

(57) **Zusammenfassung**

Das System zum Aufladen von Elektromobilen weist Stromtankstellen (20) und den Elektromobilen (2) zugeordnete Energiebezugskarten (10) auf, welche beim Energiebezug erkennbar entwertet sein müssen. Elektromobile und Energiebezugskarten sind in Kategorien eingeteilt und damit bezeichnet (5, 15). Die Stromtankstellen (20) weisen eine aufschliessbare Zugangssperre (26) auf. Damit wird ein einfaches, kostengünstiges und verbrauchs- gerechtes Auflade- und Verrechnungssystem geschaffen.

## Beschreibung

Die Erfindung bezieht sich auf ein System zum Aufladen von Elektromobilen an Stromtankstellen auf Ladeparkplätzen, auf eine Energiebezugskarte zum Laden von Elektromobilen an einer Stromtankstelle, auf eine Stromtankstelle zum Aufladen von Elektromobilen sowie auf ein Verfahren zur verbrauchsabhängigen Verrechnung des Energiebezugs an Stromtankstellen.

Unter Elektromobilen sind im folgenden alle Fahrzeuge zu verstehen, bei welchen ein Energiespeicher mit Strom aufgeladen wird, also z.B. auch mittels Elektromotor aufgeladene Schwungradspeicher und Hybridfahrzeuge. Elektromobile weisen, bedingt durch die geringe Kapazität der Energie- bzw. Stromspeicher, eine sehr beschränkte Reichweite auf. Dementsprechend besteht ein dringender Bedarf an Ladestationen zum Aufladen oder Nachladen ausserhalb der eigenen Garage. Es sind verschiedene Lösungsvorschläge bekanntgeworden, die jedoch erhebliche Nachteile aufweisen, die nicht eigenwirtschaftlich betrieben werden können, die zu empfindlich, zu kompliziert oder auch dem Missbrauch ausgesetzt sind. Zum einen sind dies einfache Systeme mit Münzautomaten zur Freigabe einer bestimmten Strommenge, welche jedoch neben den Installationskosten einen relativ hohen Unterhaltsaufwand erfordern für häufige Überwachung, Münzentleerung und Wartung. Noch wesentlich höher ist der Aufwand bei automatisierten Systemen mit Magnetkarten oder Chipkartenerfassung, mit Computersteuerungen, aufwendigen Identifikations-, Zulassungs- und Kontrollsystemen. Auf der andern Seite ist jedoch der Benützer nicht daran interessiert, zusätzlich zu den an sich günstigen Stromkosten ein Mehrfaches für unnötig teure Installationen und hohe Betriebsaufwendungen zu bezahlen. Gesucht ist also ein System, welches sowohl für den Benutzer durch kostengünstigen Strombezug wie auch für den Betreiber durch rationelle Deckung der gesamten Betriebskosten möglichst interessant ist.

Es ist daher Aufgabe der vorliegenden Erfindung, obige Nachteile zu überwinden und ein einfaches, kostengünstiges und sicheres System zum Aufladen von Elektromobilen an Stromtankstellen mit verbrauchsabhängiger Verrechnung zu schaffen.

Diese Aufgabe wird erfindungsgemäss gelöst durch ein System zum Aufladen von Elektromobilen nach Anspruch 1, durch eine Energiebezugskarte nach Anspruch 7, durch eine Stromtankstelle nach Anspruch 12 und mit einem Verfahren nach Anspruch 14. Die abhängigen Ansprüche betreffen vorteilhafte Weiterbildungen der Erfindung. Damit wird auf einfachst mögliche Art ein kostengünstiges und effizientes Aufladesystem für Elektromobile geschaffen, welches eine verbrauchsgerechte Verrechnung ermöglicht und welches den Zielen und Bedürfnissen eines Nutzungsgebietes optimal angepasst werden kann. Die Erfindung wird im folgenden anhand von Beispielen und Figuren näher erläutert. Dabei zeigen
- Fig. 1: eine erfindungsgemässe Energiebezugskarte mit mehreren Entwertungsfeldern
- Fig. 2: eine Energiebezugskarte mit einem Entwertungsfeld
- Fig. 3: eine erfindungsgemässe Stromtankstelle
- Fig. 4: ein System zum Aufladen von Elektromobilen mit mehreren Stromtankstellen.

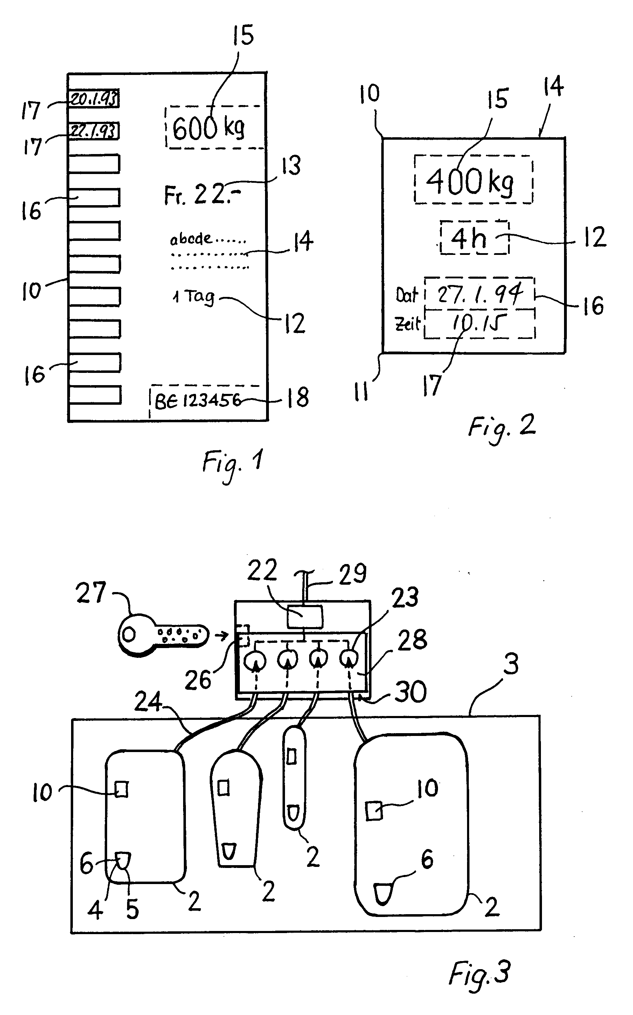

Eine erfindungsgemässe Energiebezugskarte 10 nach Fig. 1 weist mehrere Enwertungsfelder 16 auf zum Eintrag eines Entwertungszeichens 17. Die Karte 10 kann auch nur ein Entwertungsfeld 16 gemäss Fig. 2 aufweisen, oder es kann eine Karte aus mehreren zusammengehefteten, abreissbaren Einzelscheinen 11 bestehen. Der Karte ist eine Nutzungsregelung 14 zugeordnet, welche festlegt, wie die Karte durch ein vorgeschriebenes Entwertungszeichen 17 zu entwerten ist, um für einen Energiebezug einer festgelegten Energiemenge 12 berechtigt zu sein. Dieses Entwertungszeichen 17 besteht am einfachsten darin, den Zeitpunkt zu Beginn des Bezugs einzuschreiben. Die Nutzungsregelung bestimmt dann die Dauer des berechtigten Energiebezugs: z.B. 2 Stunden, 4 Stunden oder den ganzen Kalendertag - dann muss nur das Datum eingetragen werden als Entwertungszeichen (Fig. 1), sonst Datum und Uhrzeit (Fig. 2). Das Entwertungszeichen muss unlöschbar von Hand oder an einer allfällig schon vorhandenen Stempeluhr eingetragen werden.

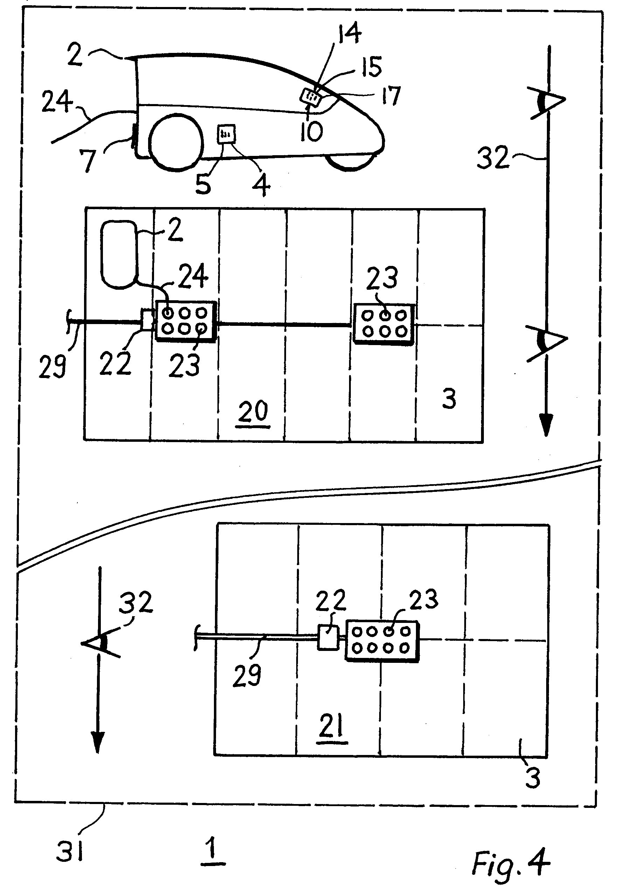

Um für unterschiedliche Elektromobile mit unterschiedlichem Energiebedarf und Verbrauch eine angemessene, verbrauchsgerechte Kostenverrechnung zu schaffen, werden die Elektromobile in Verbrauchskategorien 5 eingeteilt. Einfach und dem Energieverbrauch sehr gut entsprechend ist eine Kategorieneinteilung nach dem Leergewicht des Elektromobils, z.B. in die Kategorien 0 bis 400 kg, 400 bis 800 kg und mehr als 800 kg. Eine feinere Einteilung könnte lauten: bis 200, 400, 600, 800, 1000 kg. Die Kategorieneinteilung kann auch nach Motorleistung erfolgen (z.B. 2, 4, 6, 8 kW), nach installierter Batteriekapazität (z.B. 2, 4, 6, 8, 10 kWh) oder nach Verbrauch (z.B. 30, 60, 90, 120, 150 Wh/km). Die Kategorienbezeichnung 15 auf der Energiekarte muss übereinstimmen mit der Kategorienbezeichnung 5 am Fahrzeug (siehe Fig. 3, 4). Die verschiedenen Kategorien können z.B. auch durch verschiedene Farben unterschieden werden. Der Verkaufspreis 13 der Karte richtet sich nach der Kategorieneinteilung. Als Beispiel könnten die nachstehenden Preise für Gewichtskategorien wie folgt aussehen:

| | | | | |
|---|---|---|---|---|
| Leergewicht | 300 | 600 | 900 | 1200 kg |
| Preis | 14 | 22 | 30 | 38 Fr. für 1 Tag |
| Preis | 7 | 11 | 15 | 19 Fr. für 4 Std. |

Bezugdauer je für eine Karte mit 10 Feldern für 10 Energiebezüge.

Die Nutzungsregelung könnte z.B. aber auch festlegen, dass für 4-Stunden-Felder bei zwei Einträgen der gleichen Startzeit auf zwei Feldern während 20 Stunden geladen werden darf. Eine andere Nutzungsregelung ohne Kategorieneinteilung könnte festlegen, dass leichte Elektrofahrzeuge, z.B. bis 500 kg nur einfach entwerten und schwerere Fahrzeuge über 500 kg zweifach entwerten müssen für einen Energiebezug. Durch die Nutzungsregelung, die Kategorieneinteilung, die Preisgestaltung und auch die zugeordneten Parkierungsbedingungen kann das erfindungsgemässe System sehr individuell und effizient, genau auf die Bedürfnisse sowohl der Benützer als auch eines Betreibers, z.B einer Gemeinde, abgestimmt werden. Eine Parkregelung an der Ladestation wird zusätzlich, in Übereinstimmung mit den lokalen Reglementierungen, festgelegt. Zur Förderung von Elektromobilen im städtischen Bereich können auch bevorzugte Parkregelungen mit reservierten Parkplätzen an Stromtankstellen und ohne, bzw. mit reduzierten Parkgebühren festgelegt werden. Dazu kann auch eine Parkvignette 6 am Elektromobil eingesetzt werden. Als Zulassungszeichen 18 kann auch auf der Energiebezugskarte 10 die amtliche Zulassungsnummer 7 des Elektromobils eingetragen werden (Fig. 1, 4).

Fig. 3 zeigt ein Beispiel einer Stromtankstelle 20 mit nur einem Netzanschluss 29 und einem Stromzähler 22 für vier Steckdosen 23 zum Einstecken der Ladekabel 24 von Elektromobilen 2 unterschiedlicher Grösse und unterschiedlicher Kategorien 5 und mit entsprechend zugehörigen Kategorienklassierungen 15 auf deren Energiebezugskarten 10. Zum Einstecken des Ladekabels 24 muss eine Zugangssperre 26, hier in Form eines abschliessbaren Deckels vor den Steckdosen, überwunden werden. Dazu dient ein Zugangsschlüssel 27, der an allen Stromtankstellen eines Nutzungsgebiets 31 benützt werden kann (siehe Fig. 4). Der Zugangsschlüssel 27 wird vom Betreiber gegen eine Depotgebühr an jeden Berechtigten Elektromobilhalter abgegeben. Bei Missbrauch verfällt die Depotgebühr und der Schlüssel wird eingezogen. Nach Einstecken des Ladekabels 24 wird die Zugangssperre 26 wieder geschlossen. Dies wird durch eine kleine Öffnung 30 für den Kabeldurchgang ermöglicht. Das Kabel kann so durch Unbefugte nicht ausgezogen werden.

Es sind auch andere Formen von Zugangssperren 26, 27 möglich; so könnte auch die Stromzufuhr zu jeder Steckdose einzeln gesperrt bzw. geöffnet werden. Und der einzelne Strombezüger könnte zusätzlich noch mit einem Zeitschalter begrenzt werden. In diesem Beispiel enthält eine Parkvignette 6 als Zulassungszeichen 4 auch die Kategorienbezeichnung 5.

Fig. 4 illustriert das erfindungsgemässe Energiebezugssystem 1 mit mehreren Stromtankstellen 20, 21 in einem Nutzungsgebiet 31, z.B. mit einem Netz von Ladestationen in einer Agglomeration. Die Stromtankstelle 20 mit einem Netzanschluss 29 und Zähler 22 weist hier 2 x 6 Steckdosen 23 zum Aufladen von 12 Elektromobilen 2 auf, und die Stromtankstelle 21 an einem anderen Ort verfügt über 8 Steckdosen an einem Zähler. Die Kennzeichnung 4 des Elektromobils muss mit der entwerteten Energiebezugskarte übereinstimmen: In diesem Beispiel eine Kategorienbezeichnung 5 auf dem Elektromobil, entsprechend der Bezeichnung 15 auf der Energiekarte 10. Zur Kontrolle 32 muss die Energiekarte während dem Energiebezug gut sichtbar im Elektromobil 2 angebracht sein. Der Zugangsschlüssel 27 bleibt beim Benützer. Die korrekte Benützung der Stromtankstelle und der zugehörigen Ladeparkplätze 3 kann so auf einfache und kostengünstige Art durch die schon vorhandenen örtlichen Überwachungsorgane, z.B. die Ortspolizei, kontrolliert und gesichtert werden.

## Patentansprüche

1. System zum Aufladen von Elektromobilen an Stromtankstellen (20) auf Lade-Parkplätzen, dadurch gekennzeichnet, dass den Elektromobilen (2) Energiebezugskarten (10) zugeordnet sind, dass die Energiebezugskarten (10) beim Energiebezug erkennbar entwertet (17) sein müssen und dass die Elektromobile ein Zulassungszeichen (4) aufweisen müssen.

2. System nach Anspruch 1, dadurch gekennzeichnet, dass die Stromtankstellen (20) eine Zugangsperre (26) für Unberechtige aufweisen.

3. System nach Anspruch 1, dadurch gekennzeichnet, dass als Zulassungszeichen eine Parkplatzvignette (6) am Elektromobil fest angebracht ist.

4. System nach Anspruch 1, dadurch gekennzeichnet, dass als Zulassungszeichen (18) auf der Energiebezugskarte (10) die amtliche Zulassungsnummer (7) des Elektromobils eingetragen ist.

5. System nach Anspruch 1, dadurch gekennzeichnet, dass das Elektromobil mit einer Kategorienbezeichnung (5) markiert ist.

6. System nach Anspruch 1, dadurch gekennzeichnet, dass mehrere örtlich auseinanderliegende Stromtankstellen (20, 21) vorhanden sind.

7. Energiebezugskarte (10) zum Laden von Elektromobilen an einer Stromtankstelle, dadurch gekennzeichnet, dass sie mindestens ein Entwertungsfeld (16) aufweist, welches zu Beginn eines Energiebezugs durch ein Entwertungszeichen (17) sichtbar entwertet werden muss und dass der Karte (10) eine Nutzungsregelung (14) zugeordnet ist, welche die Energiemenge für einen Energiebezug (12) festlegt.

8. Energiebezugskarte nach Anspruch 7, dadurch gekennzeichnet, dass sie mehrere Entwertungsfelder (16) aufweist.

9. Energiebezugskarte nach Anspruch 7, dadurch gekennzeichnet, dass sie eine Kategorienbezeichnung (15) aufweist, welche einer Kategorieneinteilung (5) eines bezugsberechtigten Elektromobils (2) entspricht.

10. Energiebezugskarte nach Anspruch 7, dadurch gekennzeichnet, dass das Entwertungszeichen (17) im Eintragen des aktuellen Zeitpunkts (Datum, Uhrzeit) besteht.

11. Energiebezugskarte nach Anspruch 7, dadurch gekennzeichnet, dass das Entwertungszeichen (17) handschriftlich oder mittels Stempeluhr eintragbar ist.

12. Stromtankstelle zum Aufladen von Elektromobilen , dadurch gekennzeichnet, dass die Stromtankstelle (20) einen Netzanschluss (29) und einem Stromzähler (22)und mindestens zwei Steckdosen (23) zum Einstecken eines Ladekabels (24) eines Elektromobils und eine Zugangssperre (26) zu den Steckdosen aufweist, und dass ihr Zugangsschlüssel (27) zum Öffnen der Zugangssperre zugeordnet sind, welche an die berechtigten Elektromobilhalter abgegeben werden.

13. Stromtankstelle nach Anspruch 12, dadurch gekennzeichnet, dass die Zugangsschlüssel (27) gegen eine Depotgebühr abgegeben werden.

14. Verfahren zur verbrauchsabhängigen Verrechnung des Energiebezugs von Elektromobilen an Stromtankstellen (20, 21) in einem festgelegten Nutzungsgebiet (31), dadurch gekennzeichnet, dass Energiebezugskarten (10) nach einem der Ansprüche 7 bis 11 zu einem festgelegten Preis (13) an die Benützer abgegeben werden, dass die zum Energiebezug berechtigten Elektromobile (2) ein mit der Energiekarte (10) übereinstimmendes Zulassungszeichen (4) aufweisen müssen und dass die Energiekarte (10) bei einem Energiebezug kontrollierbar beim Elektromobil (2) angebracht sein muss.

15. Verfahren nach Anspruch 14, dadurch gekennzeichnet, dass ein gültig entwerteter Energiebezug (12) zum Laden an mehreren Stromtankstellen (20, 21) des Nutzungsgebietes (31) berechtigt.

16. Verfahren nach Anspruch 14, dadurch gekennzeichnet, dass, die Kontrolle (32) durch die örtlich vorhandenen Überwachungsorgane durchgeführt wird.
